# EUROPÄISCHE PATENTSCHRIFT

(11) **EP 3 496 936 B1**
(45) Veröffentlichungstag und Bekanntmachung des Hinweises auf die Patenterteilung: **30.11.2022**
(21) Anmeldenummer: 17751381.9
(22) Anmeldetag: 09.08.2017
(51) Int. Cl.: B29C 70/86, B29C 70/52

(54) **GURT AUS VORGEFERTIGTEN ELEMENTEN MIT GELEGE UND EIN VERFAHREN ZU SEINER FERTIGUNG**
SPAR CAP MADE OF PREFABRICATED ELEMENTS WITH LAID FABRIC AND METHOD FOR PRODUCING SAME
SEMELLE DE LONGERON EN ÉLÉMENTS PRÉFABRIQUÉS ET TISSU NON-TISSÉ ET SON PROCÉDÉ DE PRODUCTION

(30) Priorität: 10.08.2016 DE 102016009640
(43) Veröffentlichungstag der Anmeldung: 19.06.2019
(73) Patentinhaber: Siemens Gamesa Renewable Energy Service GmbH, 20097 Hamburg (DE)
(72) Erfinder: BENDEL, Urs, 24787 Fockbek (DE); WERNER, Markus, 24242 Felde (DE); RAMM, Julian, 24105 Kiel (DE); ZELLER, Lenz, 24242 Felde (DE); EYB, Enno, 24116 Kiel (DE)
(74) Vertreter: Groth, Wieland
(86) Internationale Anmeldenummer: PCT/EP2017/070156
(87) Internationale Veröffentlichungsnummer: WO 2018/029240

(56) Entgegenhaltungen:
- WO-A1-2016/015736
- Jeff Sloan: "Senvion acquires RodPack composite technology for wind turbine blades", Internet , 20. November 2015 (2015-11-20), XP002775300, Gefunden im Internet: URL:https://www.compositesworld.com/news/s envion-acquires-rodpack-composite-technolo gy-for-wind-turbine-blades [gefunden am 2017-11-06]

## Beschreibung

Die Erfindung betrifft einen Gurt eines Rotorblattes einer Windenergieanlage sowie ein Verfahren zur Fertigung eines Gurtes eines Rotorblattes einer Windenergieanlage.

Üblicherweise weisen Rotorblätter zwei Rotorblatthalbschalen auf. In den Rotorblatthalbschalen ist im Wesentlichen entlang der Linie der größten Profildicke ein Gurt aus Fasern, die im Wesentlichen parallel zur Längsachse des Rotorblattes verlaufen, sogenanntes UD-Material, integriert, der im Wesentlichen die Biegebelastung auf das Rotorblatt in Schlagrichtung abfängt. Außerdem ist üblicherweise entlang der Rotorblatt Hinterkante ein zusätzlicher Gurt integriert, ebenfalls aus UD-Material, der im Wesentlichen die Biegebelastung auf das Rotorblatt in Schwenkrichtung abfängt. Die Hauptgurte der beiden Rotorblattschalen sind mit mindestens einem Stegelement miteinander verbunden. Die Hinterkantengurte sind üblicherweise direkt miteinander verklebt.

Gurt und Stege sind dafür vorgesehen, dem Rotorblatt im Betrieb eine hinreichende Biegesteifigkeit zu geben. Es ist beispielsweise aus der DE 10 2008 055771 B4 bekannt, Gurte aus übereinander angeordneten Gewebe- und/oder Gelegelagen in einem Laminierverfahren herzustellen. Die Gurte müssen dafür jedoch einen relativ großen Querschnitt aufweisen, um eine hinreichende Zugfestigkeit in Längsrichtung zur Verfügung zu stellen.

Daneben sind Gurte aus der DE 10 2011 003560 B4 bekannt, in die in Längsrichtung verlaufende Rovinge einlaminiert sind. Nachteilig daran ist, dass die Herstellung der Gurte durch die Ausrichtung der Rovinge recht aufwändig ist.

In der WO 2016/015736 A1 ist ein Rotorblatt einer Windkraftanlage mit Gurten offenbart, die aus einem Stapel von faserverstärkten Streifen bestehen, zwischen denen Gewebelagen angeordnet sind, die in ihrer Größe den Streifen entsprechen und die das Eindringen von Harzmaterial zwischen die faserverstärkten Lagen hinein während eines Infusionsverfahrens befördern. Die Gurte weisen in jedem Längsschnitt eine rechteckige Form auf, die insbesondere an den gurtseitigen Enden mechanisch ungünstig ist.

Es ist daher Aufgabe der vorliegenden Erfindung einen Gurt sowie ein Herstellungsverfahren für einen Gurt zur Verfügung zu stellen, der einen geringeren Querschnitt bei gleicher Zugfestigkeit aufweist.

Hinsichtlich des Gurtes wird die Aufgabe durch einen Gurt mit den Merkmalen des Anspruchs 1 gelöst, bevorzugte Ausführungsformen sind Gegenstand der Unteransprüche.

Der erfindungsgemäße Gurt weist wenigstens zwei Lagen aus pultrudiertem Material, insbesondere zwei RodPack-Lagen auf und wenigstens eine Gewebe- oder Gelegelage, die zwischen den wenigstens zwei Pultrudat- bzw. RodPack-Lagen angeordnet ist und/oder die an einem tipseitigen Ende der RodPack-Lagen die RodPack-Lagen verlängernd angeordnet ist, wobei die wenigstens zwei RodPack-Lagen und die wenigsten eine Gewebe- oder Gelegelage zusammen laminiert sind.

Unter einer RodPack-Lage wird hier eine flächige Lage aus einem vorgefertigten Element verstanden, das zur Herstellung eines Gurtes verwendet werden kann. Üblicherweise werden Rovinge, das sind Bündel von Faser-Filamenten, insbesondere Glasfasern oder Kohlefasern, oder Gemische aus beiden oder andere Fasern, zu Pultrudaten laminiert. Die Fasern sind einzeln auf Rollen gelagert, werden von diesen gleichzeitig abgezogen und als Roving einem Laminierverfahren zugeführt. In diesem Laminierverfahren werden die Rovinge zusammen laminiert und auf eine vorzugsweise gemeinsame äußere Form gebracht. Die äußere Form ist im vorliegenden Fall vorzugsweise im Querschnitt senkrecht zur Längsrichtung rechteckig, es sind jedoch auch andere Querschnitte, insbesondere auch kreisförmige, trapezförmige oder quadratische Querschnitte denkbar. Der Querschnitt ist zweckmäßigerweise in Längsrichtung gleichbleibend. Die laminierten Rovinge werden als Rods bezeichnet. Diese Rods werden auf eine vorbestimmte Länge geschnitten. Vorliegend weisen die Rods eine Breite von ca. 7 mm und eine Höhe von ca. 1-2 mm auf, die Länge der Pultrudate ist unbestimmt; es sind jedoch auch andere Abmessungen denkbar, insbesondere können die Pultrudate auch Breiten von 8 mm, 9 mm, 10 mm oder jede höhere Millimeterzahl und eine Höhe von 1 mm, 2 mm, 3 mm, 4 mm oder jeder höheren Millimeterzahl annehmen. Eine vorbestimmte Anzahl von Rods werden für eine einfachere Handhabung auf ein gemeinsames Trägermedium geklebt, vorzugsweise ein fließartiges Material, sodass dieses als RodPack bezeichnete Material im Wesentlichen die gleiche Breite hat, wie der zu fertigende Gurt des Rotorblattes.

Für den erfindungsgemäßen Gurt können aber auch klassische Pultrudate benutzt werden, die einen im Wesentlichen rechteckigen Querschnitt aufweisen und so breit sind, dass sie entweder die gleiche Breite haben, wie der zu fertigende Gurt, oder dass wenige dieser Pultrudate nebeneinander gelegt die Breite des Gurtes ergeben, wobei vorzugsweise nicht mehr als vier Pultrudate nebeneinander gelegt werden müssen, um die gewünschte Gurtbreite zu erhalten.

Aufgrund ihrer Konstruktion, nämlich der im Endeffekt in Längsrichtung verlaufenden, Glas- oder Kohlefasern, weisen die Pultrudate bzw. RodPacks eine hohe Zugfestigkeit in Längsrichtung und eine deutlich geringere Querzugfestigkeit entlang der Breite und/oder Höhe auf. Insbesondere zur Erreichung der notwendigen Steifigkeit und Festigkeit der Rotorblattstruktur werden mehrere, wenigstens zwei, vorzugsweise drei, vier oder jede höhere Anzahl an Pultrudaten bzw. RodPack-Lagen übereinander angeordnet, seitlich ausgerichtet und in ihrer Länge aufeinander abgestimmt, sodass sich ein der örtlichen Biegebelastung entsprechende Dickenverteilung der Gurte ergibt. An seinem wurzelseitigen Ende und an seinem tipseitigen Ende weist der erfindungsgemäße Gurt seine geringste Dicke bzw. Querschnittsfläche auf. Zwischen seinen beiden Enden weist der erfindungsgemäße Gurt einen Bereich maximaler dicke bzw. Querschnittsfläche auf.

Zweckmäßigerweise werden die Pultrudate bzw. RodPacks als Rollenware zur Verfügung gestellt, aufgrund ihrer geringen Flächensteifigkeit lässt sich ein RodPack aufrollen. Während der Fertigung des Rotorblattes können von einer oder mehrerer Rollen Pultrudate bzw. RodPack-Material abgerollt werden und übereinander gestapelt werden.

Es hat sich gezeigt, dass im Bereich des wurzelseitigen Endes des Gurtes große Querdehnungen in Profiltiefenrichtung auf das RodPack-Material einwirken. Daher weist der erfindungsgemäße Gurt wenigstens eine Gewebe- bzw. Gelegelage zwischen zwei RodPack-Lagen auf, wobei die Fasern in dem Gewebe bzw. Gelege im Wesentlichen unter einem Winkel von plus und minus 45° bis plus und minus 60° ausgerichtet sind. In einer besonders vorteilhaften Ausprägung des erfindungsgemäßen Gurtes werden die Gewebe- bzw. Gelegelagen im Verhältnis 1:4 zwischen die RodPack-Lagen gelegt und die trockene Gewebe- bzw. Gelegelage hat ein Flächengewicht von ca. 800 g/m² in seinen beiden Hauptfaserrichtungen.

Weiter hat sich gezeigt, dass die optimale Breite der Pultrudate bzw. RodPack-Lagen so breit ist, dass diese Lagen nicht bis in das unmittelbare tipseitige Ende des Rotorblattes gelegt werden können, da hier die Tiefe des Rotorblattes entweder schon geringer ist als die breite der Pultrudate bzw. RodPack-Lagen und/oder die Vorderkante oder Hinterkante in den Bereich des Hauptgurtes hineinlaufen würde. Erfindungsgemäß enden die Pultrudate bzw. RodPack-Lagen in einem geeigneten Abstand vom Tipende des Rotorblattes und wird erfindungsgemäß durch Gelegelagen ergänzt bzw. verlängert, die die Pultrudate bzw. RodPack-Lagen überlappen und entsprechend der Kontur des Rotorblattes an ihren Längsseiten so besäumt sind, dass sie in die Kontur des Rotorblattes passen.

Nachdem alle Pultrudat bzw. Rodpack-Lagen zusammen mit allen Gewebe- bzw. Gelegelagen, die den Gurt bilden sollen, in die entsprechende Fertigungsform eingebracht sind, werden alle Lagen z.B. durch ein Infusionsverfahren mit einer Harzmasse getränkt und dadurch miteinander verbunden während die Harzmasse aushärtet.

Es hat sich gezeigt, dass die Querzugfestigkeit am deutlichsten erhöht werden kann, wenn ein oder mehrere ± 45°-Gewebe bzw. ± 45°-Gelege zwischen den einzelnen RodPack-Lagen angeordnet wird. Bei einem ± 45°-Gewebe handelt es sich um ein Gewebe, dessen beide Hauptfaserrichtungen in einem Winkel von + 45° bzw. - 45° zur Längsrichtung der RodPack-Lagen angeordnet sind. Es wurden auch Versuche mit ± 60°-Geweben durchgeführt. Die höchste Querzugfestigkeit wurde jedoch bei Verwendung von etwa ± 45°-Geweben erzielt, wobei auch bei Verwendung von ± 45° ± 10° Geweben noch gute Ergebnisse erzielt werden konnten.

In einer anderen bevorzugten Ausführungsform des erfindungsgemäßen Gurtes wird wenigstens eine der Pultrudat bzw. RodPack-Lagen mit wenigstens einer Gewebe- bzw. Gelegelage mit einer Hauptfaserrichtung in Längsrichtung tipseitig verlängert.

Vorzugsweise wird eine Vielzahl an Gewebe- bzw. Gelegelagen, die die Pultrudate bzw. RodPack-Lagen tipseitig verlängern, übereinander angeordnet. Die über die Pultrudate bzw. RodPack-Lagen hinausragenden Gewebe- bzw. Gelegelagen werden besäumt und zusammen mit den Pultrudaten bzw. RodPack-Lagen in einem Infusionsverfahren mit einem Harz getränkt und ausgehärtet.

Die Erfindung wird in ihrem zweiten Aspekt durch ein Verfahren mit den Merkmalen des Anspruchs 7 gelöst.

Das Verfahren eignet sich insbesondere zur Herstellung einer der oben genannten Gurte.

Die hergestellten und oben beschriebenen Gurte sind insbesondere zur Verwendung in einem Rotorblatt einer Windkraftanlage bestimmt, insbesondere handelt es sich bei den Gurten um Hauptgurte, die im Wesentlichen entlang der höchsten Bauhöhe des Rotorblattes in Längsrichtung des Rotorblattes in den Blattschalen integriert sind, die Hauptgurte sind in Längsrichtung im Westlichen gerade, vorzugsweise exakt gerade ausgebildet und senkrecht zur Längsrichtung, also in Profiltiefenrichtung können die Gurte eine der aerodynamischen Form des Rotorblattes angepasste Form aufweisen.

Erfindungsgemäß werden in dem Verfahren Pultrudate bzw. RodPack-Lagen übereinander geschichtet, sodass sie mit ihren großen Flächen übereinander angeordnet werden. Dabei wird mindestens einmal im Bereich des wurzelseitigen Endes der Pultrudate bzw. Rodpack-Lagen zwischen zwei benachbarten Pultrudaten bzw. RodPack-Lagen wenigstens eine Gewebe- und/oder Gelegelage angeordnet und/oder an dem tipseitigen Ende der Pultrudate bzw. RodPack-Lagen wird wenigstens eine Gewebe- und/oder Gelegelage die Pultrudate bzw. RodPack-Lagen verlängernd angeordnet. Die Pultrudate bzw. RodPacks und die Gewebe- und/oder Gelegelagen werden miteinander laminiert.

Das verwendete Laminierverfahren ist üblicherweise ein herkömmliches Infusionsverfahren wie beispielsweise ein resin injection moulding- (RIM-) Verfahren oder resin transfer moulding- (RTM-) Verfahren, in dem ein vorzugsweise zweikomponentiges Harzsystem in ein Halbzeug infundiert wird. Während der Aushärtung des Harzsystems durchschreitet das Harzsystem in der Regel einen exothermen Peak und nach Durchschreiten des exothermen Peaks wird dem Harzsystem in der Regel extern Wärme zugefügt, damit eine vollständige Vernetzung des Harzsystems stattfindet und das Laminat vollständig aushärtet.

Es ist aber auch denkbar z. B. ein Fertigungsverfahren zu wählen, welches auf dem Einsatz von vorimpregnierten Gewebe- bzw. Gelegelagen, sogenannten Prepregs, basiert, bei denen das Harz bereits in einem unausgehärteten Zustand in den Gewebe- bzw. Gelegelagen vorhanden ist, wenn diese in die Fertigungsformen eingebracht wurde.

Grundsätzlich ist es vorgesehen, in dem erfindungsgemäßen Verfahren den Gurt separat zu fertigen, es ist jedoch auch denkbar, dass der Gurt als Halbzeug auf einem Halbzeug einer Rotorblatthalbschale aufgelegt wird und dann die Rotorblatthalbschale zusammen mit dem Gurt in einem Infusionsverfahren laminiert wird. Im zweiten Fall wird das Infusionsverfahren gleichzeitig auf Rotorblatthalbschale und Gurt angewendet, während im ersten Fall das Infusionsverfahren lediglich auf den Gurt angewendet wird und separat auf die Rotorblatthalbschale, wobei der vorgefertigte Gurt dann vor der Infusion der Blattschale in den Strukturaufbau der Blattschale integriert ist oder beide Bauteile anschließend miteinander verklebt werden.

Auch hinsichtlich des erfindungsgemäßen Verfahrens werden günstigerweise Gewebe- und/ oder Gelegelagen mit zwei Hauptfaserrichtungen verwendet, die in Winkeln von ± 45° bis ± 90° zur Längsrichtung ausgerichtet werden; günstigerweise werden ± 45°-Gewebe oder - Gelege verwendet, die zwischen die benachbarten Pultrudaten bzw. RodPack-Lagen angeordnet werden. Es ist denkbar, dass die Gewebe- und Gelegelagen einzeln oder in jeder beliebigen Anzahl zwischen Pultrudaten bzw. RodPack-Lagen eingefügt werden, es können Gewebe- und Gelegelagen zwischen zwei benachbarten, drei unmittelbar aufeinanderfolgenden oder zwischen jeder höheren Anzahl an aufeinanderfolgenden Pultrudaten bzw. RodPack-Lagen eingefügt werden. Das Verhältnis zwischen Pultrudaten bzw. RodPack-Lagen und den Gewebe- bzw. Gelegelagen kann also jedes beliebige Verhältnis annehmen und über die Länge des Hauptgurtes variieren.

Erfindungsgemäß können Gewebe- bzw. Gelegelagen mit einer in Längsrichtung verlaufenden Hauptfaserrichtung zwischen Pultrudaten bzw. RodPack-Lagen angeordnet und über ein tipseitiges Ende der Pultrudate bzw. RodPack-Lagen hinaus verlängert werden. Zwischen wenigstens zwei am tipseitigen Ende hinausragenden Abschnitten der verlängerten Pultrudate bzw. RodPack-Lagen werden die oben genannten Gewebe- und/oder Gelegelagen vorzugsweise als unidirektionales Gewebe bzw. Gelege angeordnet, in denen die Fasern im Wesentlichen in der Blattlängsachse angeordnet sind.

Die Erfindung wird anhand eines Ausführungsbeispiels in fünf Figuren beschrieben, dabei zeigen:
- Fig. 1a: eine Schnittansicht senkrecht zur Längsrichtung eines erfindungsgemäßen Gurtes mit RodPack-Lagen,
- Fig 1b: eine Schnittansicht senkrecht zur Längsrichtung eines erfindungsgemäßen Gurtes mit Pultrudaten,
- Fig. 2a: eine perspektivische Ansicht des erfindungsgemäßen Gurtes aus Fig. 1a im Bereich des wurzelseitigen Endes der RodPack-Lagen,
- Fig. 2b: ein Längsschnitt des erfindungsgemäßen Gurtes aus Fig. 1a oder 1b im Bereich des tipseitigen Endes der Pultrudate bzw. RodPack-Lagen und der sie verlängernden Gelegelagen,
- Fig. 3: eine Draufsicht auf den Endabschnitt einer Rotorblattschale in dem ein erfindungsgemäßer Gurt angeordnet ist,

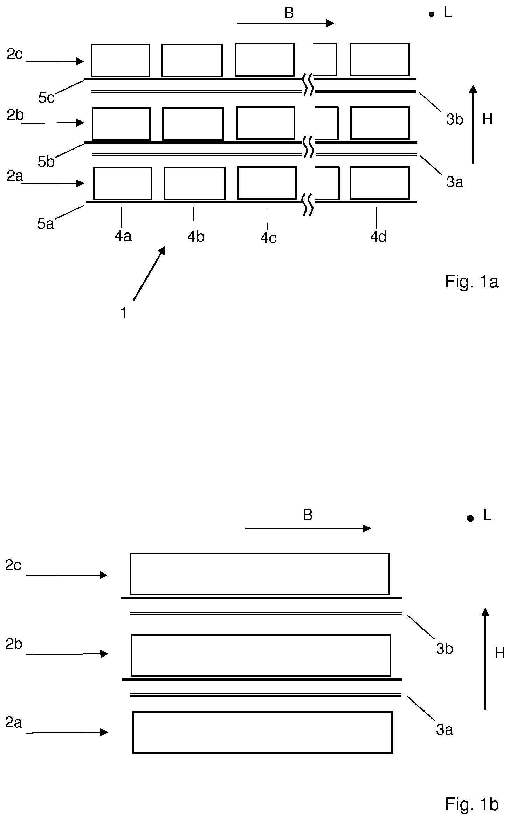

Fig. 1a zeigt eine Schnittansicht eines Gurtes 1 mit drei RodPack-Lagen 2a, 2b, 2c und zwei zwischen benachbarten Pultrudat bzw. RodPack-Lagen 2a, 2b, 2c angeordneten Gewebe- bzw. Gelegelagen 3a, 3b. Die Anzahl ist nur beispielhaft genannt, es sind in der Regel mehr RodPack-Lagen, etwa 20 bis 40 RodPack-Lagen 2a, 2b, 2c vorgesehen. Die Gewebe- bzw. Gelegelagen 3a, 3b können zwischen allen benachbarten RodPack-Lagen 2a, 2b, 2c oder auch nur zwischen einigen benachbarten RodPack-Lagen 2a, 2b, 2c vorgesehen sein,

Bei den RodPack-Lagen 2a, 2b, 2c handelt es sich jeweils um eine Mehrzahl, in Fig. 1 um genau vier nebeneinander und parallel zueinander angeordneten Rods 4a, 4b, 4c, 4d, die jeweils im Querschnitt rechteckförmig ausgebildet sind und hier vorzugsweise eine Breite von 7 mm und eine Höhe von 2 mm aufweisen. Die Rods 4a, 4b, 4c, 4d, einer RodPacklage 2a, 2b, 2c sind auf einem, vorzugsweise zusammenhängenden Trägerflies 5a, 5b, 5c aufgeklebt. Die Pultrudate 4a, 4b, 4c, 4d und das Trägerflies 5a, 5b, 5c bilden zusammen eine RodPacklage 2a, 2b, 2c aus. Die RodPack-Lagen 2a, 2b, 2c sind senkrecht zur Längsrichtung L und senkrecht zur Breite B entlang der Höhe H biegsam, sodass sie auf einer Rolle aufgewickelt transportiert werden können. Zur Herstellung des Gurtes 1 werden die RodPack-Lagen 2a, 2b, 2c auf die erforderliche Länge geschnitten und entlang der Höhe H übereinander gelegt. Zwischen benachbarten RodPack-Lagen 2a, 2b, 2c ist in Fig. 1 jeweils eine Gewebe- bzw. Gelegelage 3a, 3b angeordnet. Die RodPack-Lagen 2a, 2b, 2c weisen auf natürliche Weise die Längsrichtung L auf, die der Längsrichtung L der einzelnen Rods 4a, 4b, 4c, 4d entspricht.

Die RodPack-Lagen 2a, 2b, 2c weisen eine große Zugfestigkeit in Längsrichtung L auf, während die RodPack-Lagen 2a, 2b, 2c eine geringe Festigkeit gegenüber Querkräften aufweisen, also Kräften, die senkrecht zur Längsrichtung L entlang der Breite B oder Höhe H auf die RodPack-Lagen 2a, 2b, 2c drücken oder ziehen. Senkrecht zur Längsrichtung L weisen die RodPack-Lagen 2a, 2b, 2c lediglich eine Zugfestigkeit auf, die um den Faktor von ca. 10 - 30 geringer ist als die Zugfestigkeit der RodPack-Lagen in Längsrichtung L.

Die hohe Zugfestigkeit der RodPack-Lagen 2a, 2b, 2c in Längsrichtung L ist darin begründet, dass die Rods 4a, 4b, 4c, 4d selber über eine in Längsrichtung L deutlich höhere Zugfestigkeit als über eine Querzugfestigkeit entlang der Breite B und auch entlang der Höhe H verfügen, da die Fasern, die die Rods im Wesentlichen bilden, ebenfalls in Längsrichtung L ausgerichtet sind. Die Festigkeit der Rods in Querrichtung B, H wird ausschließlich durch die Festigkeit der Harzmatrix determiniert, da in dieser Richtung keine Fasern im Rod und damit im RodPack liegen.

Die hier verwendeten Rods 4a, 4b, 4c, 4d werden in einem Strangziehverfahren hergestellt, dabei werden im Wesentlichen Rovinge zusammen laminiert. Bei den Rovingen kann es sich um Bündel von Glasfasern oder Kohlefasern oder Mischungen davon oder auch anderen Fasern handeln, die gleichzeitig von nebeneinander angeordneten Rollen abgezogen werden. Die Rovinge werden in einem Strangziehverfahren zusammen laminiert und als Rod 4a, 4b, 4c, 4d in eine im Querschnitt rechteckige Form mit den oben genannten Abmessungen gebracht und dann auf eine benötigte Länge geschnitten.

Zur besseren Handhabung der Rods 4a, 4b, 4c, 4d werden diese entlang der Breite B nebeneinander angeordnet und nebeneinander angeordnet auf einem Trägerflies 5a, 5b, 5c aufgeklebt. Die so entstehenden RodPack-Lagen 2a, 2b, 2c können aufgerollt und als Rollenware leichter transportiert und verarbeitet werden.

In Fig. 1b ist der Querschnitt des erfindungsgemäßen Gurtes dargestellt, wenn dieser mit einem Pultrudat hergestellt wird. In dem hier skizzierten Beispiel hat die Pultrudatplatte die gleiche Breite wie der gewünschte Gurt. Es können aber auch schmalere Pultrudatplatten eingesetzt werden, die dann nebeneinander liegen, vorzugsweise nicht mehr als 4 Platten nebeneinander. Darüber hinaus gilt alles oben am Beispiel der Fig 1a erläuterte auch für das Ausführungsbeispiel eines erfindungsgemäßen Gurtes aus Pultrudaten.

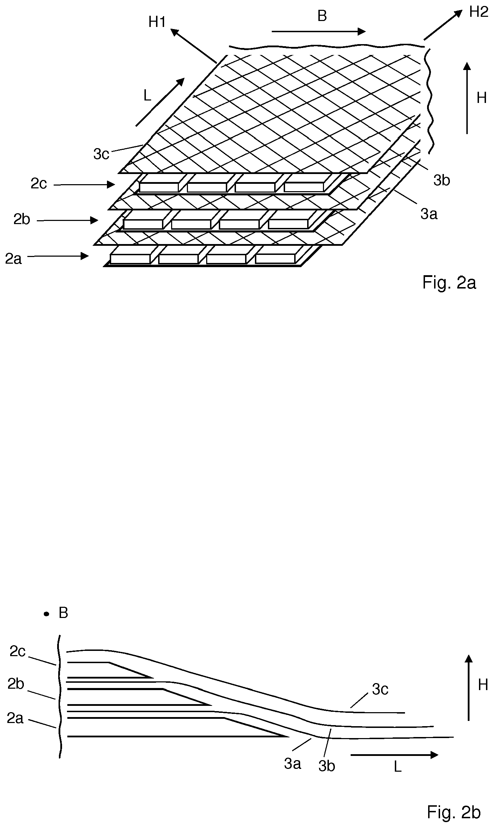

Die Erfindung zeichnet sich in einem ihrer Aspekte dadurch aus, dass gemäß Fig. 2a im Bereich des wurzelseitigen Endes der RodPack-Lagen auf eine RodPacklage 2a, 2b, 2c wenigstens eine Gewebe- bzw. Gelegelage 3a, 3b aufgebracht wird. Während die Fasern der RodPack-Lagen 2a, 2b, 2c über eine durch die Pultrudatausrichtung bestimmte Längsrichtung L verfügen, weisen die Gewebe- bzw. Gelegelagen 3a, 3b hier hingegen zwei Hauptfaserrichtungen H1, H2 auf, die durch die Richtungen der ineinander gewebten oder aufeinander genähten Fasern ausgebildet werden. Unter Hauptfaserrichtung H1, H2 werden hier die beiden Faserrichtungen verstanden, entlang deren Richtungen die Mehrzahl der Fasern der jeweiligen Gewebe- bzw. Gelegelagen 3a, 3b ausgerichtet sind, das ändert aber nichts daran, dass eine geringere Anzahl an Fasern nicht entlang der Hauptfaserrichtungen verlaufen kann. Entlang jeder der beiden Hauptfaserrichtung H1, H2 verlaufen jedoch jeweils mindestens 30%, vorzugsweise jedoch mindestens 40% der Fasern. Alternativ können statt einer Gewebelage 3a, 3b auch zwei, drei oder eine Mehrzahl an Gewebelagen 3a, 3b zwischen zwei RodPack-Lagen 2a, 2b, 2c vorgesehen sein. Alle Ausführungen in diesem Kapitel gelten auch für den Fall, dass der erfindungsgemäße Gurt mit Pultrudatplatten, wie oben beschrieben, hergestellt wird.

Die Erfindung zeichnet sich in einem ihrer Aspekte gemäß Fig. 2b im Bereich des tipseitigen Endes der Pultrudat bzw. RodPacklagen 2a, 2b, 2c dadurch aus, dass die Pultrudat bzw. RodPacklagen 2a, 2b, 2c durch Gelegelagen 3a, 3b, 3c in Richtung tipseitiges Ende des Gurtes verlängert werden und dadurch, dass die Pultrudat bzw. RodPacklagen an ihrem jeweiligen tipseitigen Ende eine Schräge aufweisen, die einen sanften Übergang der Gelegelagen 3a, 3b, 3c von den Pultrudat bzw. RodPacklagen 2a, 2b, 2c und über deren Ende hinaus gewährleistet.

Eine Gelegelage in diesem Bereich des erfindungsgemäßen Gurtes zeichnet sich durch eine einzige Hauptfaserrichtung H1 aus, entlang der etwa 90% der Fasern ausgerichtet sind, während eine deutlich geringere Menge an Querfasern in Richtung B des Gurtes in einer Menge von unter 10%, vorzugsweise von unter 5% dazu bestimmt ist, die Fasern der einzigen Hauptfaserrichtung H1 zusammenzuhalten und dem Gelegelage 3a, 3b, 3c eine hinreichende Stabilität für die Handhabung zu bieten.

In den Ausführungsbeispielen in Fig.1a, 1b, 2a und 2b sind lediglich wenige RodPacklagen 2a, 2b, 2c und eine Gewebe- bzw. Gelegelage 3a, 3b, 3c dargestellt. Auf der Gewebelage 3a, bzw. 3c können in dem erfindungsgemäßen Gurt noch weitere RodPacklagen 2 alternierend mit weiteren Gewebelagen 3 vorgesehen sein. Die Anzahl der RodPack- 2a, 2b, 2c und Gewebelagen 3a, 3b kann bei über 20, vorzugsweise bei über 30, besonders bevorzugt bei über 40 Lagen liegen. Grundsätzlich ist die Anzahl der RodPack-Lagen 2a, 2b, 2c nicht beschränkt, sondern den Erfordernissen des Rotorblattes, in das der Gurt 1 eingebaut wird, angepasst.

In der Ausführungsform gemäß Fig. 2a ist eine ±45° Gewebelage 3c mit zwei Hauptfaserrichtungen H1, H2 derart angeordnet, dass die beiden Hauptfaserrichtungen H1, H2 in einen Winkel von 45° bzw. einem Winkel von -45° zur Längsrichtung L angeordnet sind. Die Anordnung ist auf einen Gurt 1 mit einer Mehrzahl an RodPack-Lagen 2a, 2b, 2c und Gewebelagen 3a, 3b übertragbar. Es sind jedoch auch andere Winkelstellungen denkbar, insbesondere ist es auch denkbar, dass das Gewebe selber zwei Hauptfaserrichtungen H1, H2 aufweist, die nicht einen Winkel von 90° relativ zueinander aufweisen, sondern beispielsweise einen Winkel von 120°, sodass die Hauptfaserrichtungen H1, H2 in einem Winkel von 60° bzw. in einem Winkel von -60° zur Längsrichtung L ausgerichtet werden können.

Es sind jedoch auch noch andere Relativwinkel zwischen den Hauptfaserrichtungen H1, H2 der Gewebe denkbar, insbesondere sind alle Relativwinkel im Bereich von 90° ± 10° bevorzugt.

Durch die Gewebelagen 3a, 3b erhält der Gurt 1 eine deutlich erhöhte Querzugfestigkeit gegenüber einem Gurt 1, der aus unmittelbar übereinandergeschichteten, sich berührenden Pultrudate bzw. RodPack-Lagen 2a, 2b, 2c, besteht.

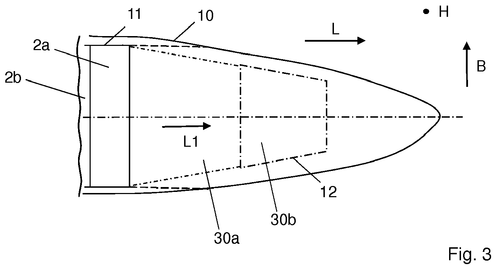

Fig. 3 zeigt in einem anderen Aspekt der Erfindung einen Endabschnitt des Gurtes 1 in Fig. 1. Unter Endabschnitt ist hier das tipseitige Ende des Gurtes zu verstehen. In der Fig. 3 ist die Draufsicht auf das tipseitige Ende einer Rotorblattschale zu sehen, die Außenkontur 10 der fertigen Blattschale, die Außenkontur 11 der Pulturdate bzw. RodPack-Lagen 2a, 2b und den Teil der Kontur 12 der UD-Lage 30a, 30b, die tipseitig über die Pulturdate bzw. RodPack-Lagen 2a, 2b hinausragen. In der Fig. 3 sind beispielhaft jeweils 2 Lagen Pultrudate bzw. RodPack-Lagen 2a, 2b dargestellt, die jeweils von einer UD-Lage 30a, 30b in Richtung Tip verlängert werden. Der erfindungsgemäße Gurt ist aber nicht auf 2 Pultrudate bzw. RodPack-Lagen beschränkt, die in Richtung Tip verlängert werden, sondern es können im Prinzip beliebig viele Pultrudate bzw. RodPack-Lagen in Richtung Tip verlängert werden.

Die Pultrudate bzw. RodPack-Lagen 2a, 2b, 2c, werden als Rollenware zur Verfügung gestellt und auf eine durch die Rotorblattlänge bestimmte Länge geschnitten. Es ist jedoch schwierig, die Pultrudate bzw. RodPack-Lagen 2a, 2b, 2c, zu säumen, d.h. in der Breite zu verjüngen.

Im Tipbereich des Rotorblattes müssen sich die Gurte 1, damit sie bis in den äußersten Tip hineinragen können, verjüngen und schmaler als im Wurzelbereich oder im aerodynamischen Bereich des Rotorblattes ausgebildet sein. Um den Gurt 1 bis in den äußersten Tip des Innenraumes des Rotorblattes hineinreichen lassen zu können, werden die RodPack-Lagen 2a, 2b auf eine Länge abgeschnitten, in der sie noch ohne Verjüngung, d.h. Besäumung im Rotorblattinnenraum innen auf die Rotorblattschale aufgebracht werden können, während der Gurt 1 in Richtung des Tips vom Gurtende in den Tip hinein durch UD-Lagen 30a, 30b (unidirektionale Lagen) weitergeführt wird. Bei den UD-Lagen 30a, 30b handelt es sich um Gewebe- bzw. Gelegelagen mit einer einzigen Hauptfaserrichtung L1. Die Hauptfaserrichtung L1 zeichnet sich dadurch aus, dass etwa 90%, vorzugsweise über 95% der Fasern entlang dieser Richtung verlaufen. Die Hauptfaserrichtung L1 ist in Längsrichtung L ausgerichtet.

Es ist vorgesehen, dass die UD-Lagen 30a, 30b zum wurzelseitigen Ende des Gurtes 1 hin zwischen den RodPack-Lagen 2a, 2b verlaufen, es ist denkbar, dass die UD-Lagen 30a, 30b am äußersten, wurzelseitigen Ende des Gurtes 1 beginnen, sich über die gesamte Längsausdehnung der RodPack-Lagen 2a, 2b erstrecken und am tipseitigen Ende der RodPack-Lagen 2a, 2b über die RodPack-Lagen 2a, 2b hinaus verlängert sind. Durch die Einbindung der UD-Lagen 30a, 30b zwischen den RodPack-Lagen 2a, 2b ist der Gurt 1 insbesondere im Bereich des tipseitigen Endes des Gurtes 1 sehr gut herstellbar.

Der Gurt 1 kann separat gefertigt werden. Dazu werden zunächst die oben beschriebenen Pultrudat bzw. RodPack-Lagen 2a, 2b, 2c und Gewebe- bzw. Gelegelagen 3a, 3b, 30a, 30b übereinander bzw. nebeneinander in der entsprechenden Produktionsform geschichtet. Anschließend wird z. B. ein Infusionsverfahren durchgeführt, in dem zwischen die Pultrudat bzw. RodPack-Lagen 2a, 2b, 2c und in die Gewebe- bzw. Gelegelagen 3a, 3b, 30a, 30b hinein als auch ggf. in die Zwischenräume zwischen den Rods 4a, 4b, 4c, 4d der RodPack-Lagen 2a, 2b, 2c ein Harzsystem infundiert wird.

Es sind grundsätzlich zwei unterschiedliche Verfahren zur Herstellung einer Rotorblatthalbschale mit einem Gurt 1 vorgesehen, in der einen Variante wird der Gurt 1 zunächst separat gefertigt, z. B. mit Hilfe eines Infusionsverfahrens, während in der zweiten Variante das Halbzeug des Gurtes 1 mit dem Halbzeug der Rotorblatthalbschale aufgelegt wird und dann das Halbzeug der Rotorblatthalbschale einschließlich dem Halbzeug des Gurtes 1 zusammen in einem Infusionsverfahren laminiert wird. Unabhängig von der Wahl der Variante wird das Halbzeug in eine Fertigungsvorrichtung eingelegt. Anschließend wird das in den Fertigungsvorrichtung übereinander geschichtete Halbzeug mit einer Vakuumfolie formschaleninnenseitig abgedichtet, d. h. eine Vakuumfolie wird auf das Halbzeug gelegt und die Vakuumfolie wird an den Rändern der Fertigungshalbschale abgedichtet. Dann wird über Zu- und Abführleitungen ein vorzugsweise zweikomponentiges Harzsystem in das Halbzeug infundiert und zunächst Luft und nach Tränkung des Halbzeugs mit dem Harzsystem, überschüssiges flüssige Harzsystem über Abführleitungen aus dem Halbzeug herausgesogen. Wenn das Halbzeug vollständig mit Harz getränkt ist, setzt der Aushärtevorgang in Form einer exothermen chemischen Reaktion ein. Nach Durchschreiten des exothermen Peaks wird dem Harzsystem bzw. dem getränkten Halbzeug in der Regel externe Wärme zugeführt, dafür sind in den Formhalbschalen üblicherweise Heizmittel vorgesehen oder es sind extern Heizstrahler oder Heizmittel vorgesehen. Durch die externe Zufuhr von Wärme wird das Harzsystem vollständig ausgehärtet.

Es hat sich als günstig herausgestellt, den Gurt 1 separat von der Rotorblatthalbschale zu fertigen, weil dadurch evtl. aufgetretene Fehler im Gurt 1 frühzeitig erkannt werden können und dieser ggf. fehlerhafte Gurt 1 dann nicht weiterverwendet wird, um eine Rotorblattschale herzustellen.

Der erfindungsgemäße Gurt 1 ist durch die Verwendung der Pultrudate bzw. RodPacks in Längsrichtung L im Wesentlichen geradlinig ausgebildet, sodass es sich bei dem erfindungsgemäßen Gurt 1 vor allem um einen Hauptgurt handelt, der in Längsrichtung L entlang der Innenwandung einer Rotorblatthalbschale verläuft und dort aufgeklebt wird. Es ist grundsätzlich denkbar, das Verfahren auch für einen Hinterkantengurt zu verwenden, dazu könnte beispielsweise der Gurt 1 nicht über die gesamte Länge des Rotorblattes vorgefertigt werden, sondern es könnten gerade Abschnitte des Hinterkantengurtes vorgefertigt und dann in der Rotorblatthalbschale stückweise integriert werden.

### Bezugszeichenliste

- 1: Gurt
- 2a: RodPacklage
- 2b: RodPacklage
- 2c: RodPacklage
- 3a: Gewebe- oder Gelegelage
- 3b: Gewebe- oder Gelegelage
- 3c: Gewebe- oder Gelegelage
- 4a: Rod
- 4b: Rod
- 4c: Rod
- 4d: Rod
- 5a: Trägerflies
- 5b: Trägerflies
- 5c: Trägerflies
- 10: Außenkontur
- 11: Außenkontur
- 12: Kontur
- 30a: UD-Lage
- 30b: UD-Lage

- L: Längsrichtung
- L1: Hauptfaserrichtung des UD-Geleges
- B: Breite
- H: Höhe
- H1: Hauptfaserrichtung
- H2: Hauptfaserrichtung

## Patentansprüche

1. Gurt (1) eines Rotorblattes einer Windenergieanlage mit wenigstens zwei Pultrudatlagen bzw. Rodpack-Lagen (2a) (2b) (2c) die jeweils aus auf ein Trägermedium geklebten Pultrudaten bestehen und wenigstens einer Gewebe- und/oder Gelegelage(3a) (3b) (30a) (30b), die zwischen den wenigstens zwei Pultrudat bzw. RodPack-Lagen (2a) (2b) (2c) und/oder an einem tipseitigen Ende der Pultrudat bzw. RodPack-Lagen (2a) (2b) (2c), die Pultrudat bzw. RodPack-Lagen (2a) (2b) (2c) verlängernd angeordnet ist, wobei die wenigstens zwei Pultrudat bzw. RodPack-Lagen (2a) (2b) (2c) und die wenigstens eine Gewebe- und/oder Gelegelage (3a) (3b) (30a) (30b) miteinander durch eine ausgehärtete Harzmasse verbunden sind.

2. Gurt (1) nach einem der Ansprüche 1,
**dadurch gekennzeichnet, dass** zwischen benachbarten Pultrudat bzw. RodPack-Lagen (2a) (2b) (2c) Gewebe- und/oder Gelegelagen (3a) (3b) mit einer Faserrichtung vorgesehen sind, die in einem Winkel zur Längsrichtung (L) der RodPacklage (2a) (2b) (2c) angeordnet ist.

3. Gurt (1) nach einem der Ansprüche 1 oder 2,
**dadurch gekennzeichnet, dass** die Gewebe- oder Gelegelagen (3a) (3b) zwei Hauptfaserrichtungen (H1) (H2) aufweisen, die in Winkel von ±45° bis ±90° zur Längsrichtung (L) ausgerichtet sind.

4. Gurt (1) nach Anspruch 3,
**dadurch gekennzeichnet, dass** die Hauptfaserrichtungen (H1) (H2) in Winkeln von ±45° zur Längsrichtung (L) ausgerichtet sind.

5. Gurt (1) nach einem der vorstehenden Ansprüche,
**dadurch gekennzeichnet, dass** zwischen den wenigstens zwei RodPack-Lagen (2a) (2b) (2c), wenigstens eine Gewebe- oder Gelegelage 30a, 30b mit einer Hauptfaserrichtung (L1) in Längsrichtung (L) angeordnet ist und die Gewebe- oder Gelegelage mit Hauptfaserrichtung (L1) in Längsrichtung (L) tipseitig über die wenigstens zwei RodPack-Lagen (2a) (2b) (2c), hinaus verlängert sind.

6. Gurt (1) nach einem der Ansprüche 1 bis 5,
**dadurch gekennzeichnet, dass** die verlängerten Abschnitte entlang ihrer Längsseiten zur Rotorblattvorder- und -hinterkante besäumt sind.

7. Verfahren zur Fertigung eines Gurtes, indem Pultrudatlagen bzw. Rodpack-Lagen (2a, 2b, 2c) die jeweils aus auf ein Trägermedium geklebten Pultrudaten bestehen, übereinander geschichtet werden und zwischen wenigstens zwei benachbarten RodPack-Lagen (2a) (2b) (2c), wenigstens eine Gelege- und/oder Gewebelage (3a) (3b) angeordnet wird und/oder an einem tipseitigen Ende der RodPack-Lagen (2a) (2b) (2c), wenigstens eine Gewebe- bzw. Gelegelage 30a, 30b die Pultrudat bzw. RodPack-Lagen (2a) (2b) (2c), verlängernd angeordnet wird und die Pultrudat bzw. RodPack- und Gelege-und/oder Gewebelagen 2a, 2b, 2c, (3a) (3b) (30a) (30b) miteinander durch ein Harzsystem verbunden werden.

8. Verfahren nach Anspruch 7,
**dadurch gekennzeichnet, dass** die Gewebe- und/oder Gelegelagen (3a) (3b) zwei Hauptfaserrichtungen (H1) (H2) aufweisen, die in Winkeln von ±45° bis ±90° zur Längsrichtung (L) ausgerichtet werden.

9. Verfahren nach Anspruch 8,
**dadurch gekennzeichnet, dass** die Hauptfaserrichtungen (H1) (H2) in Winkeln von ±45° zur Längsrichtung (L) ausgerichtet werden.

10. Verfahren nach einem der Ansprüche 7 bis 9,
**dadurch gekennzeichnet, dass** Gewebe- bzw. Gelegelagen (30a), (30b) mit einer in Längsrichtung (L) verlaufenden Hauptfaserrichtung (L1) zwischen den Pultrudat bzw. RodPack-Lagen (2a) (2b) (2c), angeordnet werden und diese über ein tipseitiges Ende der Pultrudat bzw RodPack-Lagen (2a) (2b) (2c), hinaus verlängert werden.

## Claims

1. Spar cap (1) of a rotor blade of a wind turbine comprising at least two pultrudate or RodPack layers (2a) (2b) (2c), each consisting of pultrudate layers adhesively attached onto a carrier medium and at least one woven and/or nonwoven layer (3a) (3b) (30a) (30b), which is arranged between the at least two pultrudate or RodPack layers (2a) (2b) (2c) and/or which is arranged as an extension of the pultrudate or RodPack layers (2a) (2b) (2c) at a tip-side end of the pultrudate or RodPack layers (2a) (2b) (2c), the at least two pultrudate or RodPack layers (2a) (2b) (2c) and the at least one woven or nonwoven layer (3a) (3b) (30a) (30b) being connected to one another by a cured resin compound.

2. Spar cap (1) according to one of Claims 1,
**characterized in that** arranged between adjacent pultrudate or RodPack layers (2a) (2b) (2c) are woven and/or nonwoven layers (3a) (3b) with a fibre direction which is arranged at an angle to the longitudinal direction (L) of the RodPack layer (2a) (2b) (2c).

3. Spar cap (1) according to one of Claims 1 or 2,
**characterized in that** the woven or nonwoven layers (3a) (3b) have two main fibre directions (H1) (H2), which are aligned at an angle of ±45° to ±90° to the longitudinal direction (L).

4. Spar cap (1) according to Claim 3,
**characterized in that** the main fibre directions (H1) (H2) are aligned at angles of ±45° to the longitudinal direction (L).

5. Spar cap (1) according to one of the preceding claims,
**characterized in that** arranged between the at least two RodPack layers (2a) (2b) (2c) is at least one woven or nonwoven layer 30a, 30b with a main fibre direction (L1) in the longitudinal direction (L) and the woven or nonwoven layer with the main fibre direction (L1) in the longitudinal direction (L) are extended on the tip side beyond the at least two RodPack layers (2a) (2b) (2c).

6. Spar cap (1) according to one of Claims 1 to 5,
**characterized in that** the extended portions are trimmed along their longitudinal sides with respect to the rotor blade leading edge and trailing edge.

7. Process for producing a spar cap, in which pultrudate or RodPack layers (2a) (2b) (2c), each consisting of pultrudate layers adhesively attached onto a carrier medium, are stacked one on top of the other and between at least two adjacent RodPack layers (2a) (2b) (2c) at least one nonwoven and/or woven layer (3a) (3b) is arranged and/or at a tip-side end of the RodPack layers (2a) (2b) (2c) at least one woven or nonwoven layer 30a, 30b is arranged as an extension of the pultrudate or RodPack layers (2a) (2b) (2c), and the pultrudate or RodPack and nonwoven and/or woven layers 2a, 2b, 2c, (3a) (3b) (30a) (30b) are connected to one another by a resin system.

8. Process according to Claim 7,
**characterized in that** the woven and/or nonwoven layers (3a) (3b) have two main fibre directions (H1) (H2), which are aligned at angles of ±45° to ±90° to the longitudinal direction (L).

9. Process according to Claim 8,
**characterized in that** the main fibre directions (H1) (H2) are aligned at angles of ±45° to the longitudinal direction (L).

10. Process according to one of Claims 7 to 9,
**characterized in that** woven or nonwoven layers (30a), (30b) with a main fibre direction (L1) running in the longitudinal direction (L) are arranged between the pultrudate or RodPack layers (2a) (2b) (2c) and these are extended beyond a tip side end of the pultrudate or RodPack layers (2a) (2b) (2c).

## Revendications

1. Courroie (1) d'une pale de rotor d'une installation éolienne avec
au moins deux couches de profilés pultrudés ou de couches de RodPack (2a) (2b) (2c) qui consistent respectivement en des couches de profilés pultrudés collées sur un agent de support et
au moins une couche de tissu et/ou de nappe (3a) (3b) (30a) (30b) qui est placée entre les au moins deux couches de profilés pultrudés ou de couches de RodPack (2a) (2b) (2c) et/ou à une extrémité côté pointe des couches de profilés pultrudés ou de couches de RodPack (2a) (2b) (2c)qui est placée en prolongeant les couches de profilés pultrudés ou les couches de RodPack (2a) (2b) (2c), cependant que les au moins deux couches de profilés pultrudés ou de couches de RodPack (2a) (2b) (2c) et la au moins une couche de tissu et/ou de nappe (3a) (3b) (30a) (30b) sont reliées l'une à l'autre par une masse de résine durcie.

2. Courroie (1) selon la revendication 1, **caractérisée en ce que** des couches de tissu et/ou de nappe (3a) (3b) avec un sens de fibres qui est placé dans un angle avec le sens longitudinal (L) de la couche de RodPack (2a) (2b) (2c) sont prévues entre des couches de profilés pultrudés ou de couches de RodPack adjacentes (2a) (2b) (2c).

3. Courroie (1) selon l'une des revendications 1 ou 2, **caractérisée en ce que** les couches de tissu et/ou de nappe (3a) (3b) présentent deux sens de fibres principaux (H1) (H2) qui sont orientés dans un angle de ± 45° à ± 90° par rapport au sens longitudinal (L).

4. Courroie (1) selon la revendication 3, **caractérisée en ce que** les sens de fibres principaux (H1) (H2) sont orientés dans des angles de ± 45° par rapport au sens longitudinal (L).

5. Courroie (1) selon l'une des revendications précédentes, **caractérisée en ce qu'**au moins une couche de tissu et/ou de nappe (30a) (30b) avec un sens de fibres principal (L1) dans le sens longitudinal (L) est placée entre les au moins deux couches de RodPack (2a) (2b) (2c) et la couche de tissu et/ou de nappe avec le sens de fibres principal (L1) dans le sens longitudinal (L) est prolongée côté pointe au-delà des au moins deux couches de RodPack (2a) (2b) (2c).

6. Courroie (1) selon l'une des revendications 1 à 5précédentes, **caractérisée en ce que** les sections prolongées sont rognées le long de leurs longs côtés vers l'arête avant et arrière de la pale de rotor.

7. Procédé de fabrication d'une courroie, cependant que des couches de profilés pultrudés ou des couches de RodPack (2a) (2b) (2c) qui consistent respectivement en des couches de profilés pultrudés collées sur un agent de support sont empilées l'une sur l'autre et au moins une couche de tissu et/ou de nappe (3a) (3b) est placée entre au moins deux couches de profilés pultrudés ou de couches de RodPack adjacentes (2a) (2b) (2c) et/ou au moins une couche de tissu et/ou de nappe (30a) (30b) est placée à une extrémité côté pointe des couches de RodPack (2a) (2b) (2c) en prolongeant les couches de profilés pultrudés ou les couches de RodPack (2a) (2b) (2c), cependant que les couches de profilés pultrudés ou de couches de RodPack (2a) (2b) (2c) et les couches de tissu et/ou de nappe (3a) (3b) (30a) (30b) sont reliées l'une à l'autre par système de résine.

8. Procédé selon la revendication 7, **caractérisé en ce que** les couches de tissu et/ou de nappe (3a) (3b) présentent deux sens de fibres principaux (H1) (H2) qui sont orientés dans des angles de ± 45° à ± 90° par rapport au sens longitudinal (L).

9. Procédé selon la revendication 8, **caractérisé en ce que** les sens de fibres principaux (H1) (H2) sont orientés dans des angles de ± 45° par rapport au sens longitudinal (L).

10. Procédé selon l'une des revendications 7 à 9, **caractérisé en ce que** des couches de tissu et/ou de nappe (30a) (30b) sont placées avec un sens de fibres principal (L1) dans le sens longitudinal (L) entre les couches de profilés pultrudés ou les couches de RodPack (2a) (2b) (2c) et que celles-ci sont prolongées au-delà d'une extrémité côté pointe des couches de profilés pultrudés ou de couches de RodPack (2a) (2b) (2c).
